# EUROPEAN PATENT SPECIFICATION

(11) **EP 4 184 775 B1**
(45) Date of publication and mention of the grant of the patent: **21.10.2026**
(21) Application number: 22208781.9
(22) Date of filing: 22.11.2022
(51) Int. Cl.: H02M 3/155, H02M 3/07

(54) **BUCK CONVERTER WITH HIGH POWER EFFICIENCY**
ABWÄRTSWANDLER MIT HOHER LEISTUNGSEFFIZIENZ
CONVERTISSEUR ABAISSEUR DE TENSION À HAUT RENDEMENT ÉNERGÉTIQUE

(30) Priority: 23.11.2021 US 202163282209 P; 22.08.2022 US 202217821215
(43) Date of publication of application: 24.05.2023
(73) Proprietor: MediaTek Inc., Hsinchu City 30078 (TW)
(72) Inventor: LI, Chih-Chen, Hsinchu City (TW); SYU, Jin-Yan, Hsinchu City (TW)
(74) Representative: Wright, Howard Hugh Burnby

(56) References cited:
- US-A1- 2021 336 541

## Description

The present invention relates to buck converters.

### Description of the Related Art

A buck converter steps down voltage from an input voltage (supply) to an output voltage (load). It is a class of switched-mode power supply (SMPS), and typically uses an inductor as an energy storage element.

In a traditional inductor-based buck converter operating at a high conversion rate (e.g., 4V-to-1V), the dominant power loss is the switching loss (CV²F). The high input voltage (e.g., 4V) results in significant switching loss. In addition to the switching loss, the conduction loss (IR²) should also be taken into consideration in the design of a buck converter.

A buck converter with high power efficiency is called for.

US 2021/336541 discloses a DC-DC converter that has a capacitor charged by the input voltage of the DC-DC converter. The capacitor provides energy to the voltage output end of the DC-DC converter when the voltage input is disconnected from the DC-DC converter.

### BRIEF SUMMARY OF THE INVENTION

A buck converter with high power efficiency is proposed.

A buck converter according to the present invention is defined in appended independent device claim 1. Advantageous features are set out in the appended dependent claims. In an exemplary embodiment, a buck converter converting an input voltage to an output voltage has an inductor, a voltage shift component, and a discharging branch. The inductor is charged and discharged to regulate the output voltage. The voltage shift component, implemented by a capacitor, shifts the input voltage to a lower level to charge the inductor. The discharging branch is coupled to the inductor when the inductor is discharged; wherein the buck converter is characterized in further comprises a voltage shift setting circuit, converting the output voltage of the buck converter to an expected voltage that is shifted from the output voltage and is used in charging the capacitor during a discharging phase of the inductor for the capacitor to provide a voltage shift during a charging phase of the inductor.

Because of the voltage shift component, the switching loss (CV²F) is significantly suppressed by the lower operating voltages supplied to the parasitic capacitors.

Because of the discharging branch, the total current on the circuit is suppressed, and the conduction loss (IR²) is significantly suppressed.

In an exemplary embodiment, the buck converter has a first switch. When being turned on, the first switch couples the input voltage to a first terminal of the voltage shift component. The voltage shift component has a second terminal coupled to the first terminal of the inductor. The inductor has a second terminal coupled to the output terminal of the buck converter that provides the output voltage.

In an exemplary embodiment, the buck converter has a second switch and a third switch. When being turned on, the second switch couples the first terminal of the inductor to ground. When being turned on, the third switch couples the output terminal of the buck converter to the first terminal of the voltage shift component.

In an exemplary embodiment, the first switch is turned on in the charging phase of the inductor, and the second switch and the third switch are turned on in the discharging phase of the inductor.

In an exemplary embodiment, the voltage shift provided by the voltage shift component to lower the input voltage is set during the discharging phase of the inductor.

In accordance with the claimed embodiment, the voltage shift component is a capacitor.

In an exemplary embodiment, during the discharging phase of the inductor, the capacitor is charged to store the output voltage as the voltage shift.

In accordance with the claimed embodiment, the buck converter has a voltage shift setting circuit, converting the output voltage of the buck converter to the expected voltage used in charging the capacitor during the discharging phase of the inductor, for the capacitor to provide the voltage shift during the charging phase of the inductor.

In an exemplary embodiment, the expected voltage is coupled to the capacitor through the third switch during the discharging phase of the inductor.

In an exemplary embodiment, the expected voltage is b times the output voltage, where b is a number.

In an exemplary embodiment, the expected voltage is b times the output voltage plus c, where b and c are two numbers.

In an exemplary embodiment, the first switch is a p-channel metal oxide semiconductor transistor, and the second switch and the third switch are n-channel metal oxide semiconductor transistors.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
FIG. 1 shows a buck converter 100;
FIG. 2A illustrates the charging phase (Φ1) of the inductor L;
FIG. 2B illustrates the discharging phase (Φ2) of the inductor L; and
FIG. 3 illustrates a buck converter 300 in accordance with an exemplary embodiment of the present invention.

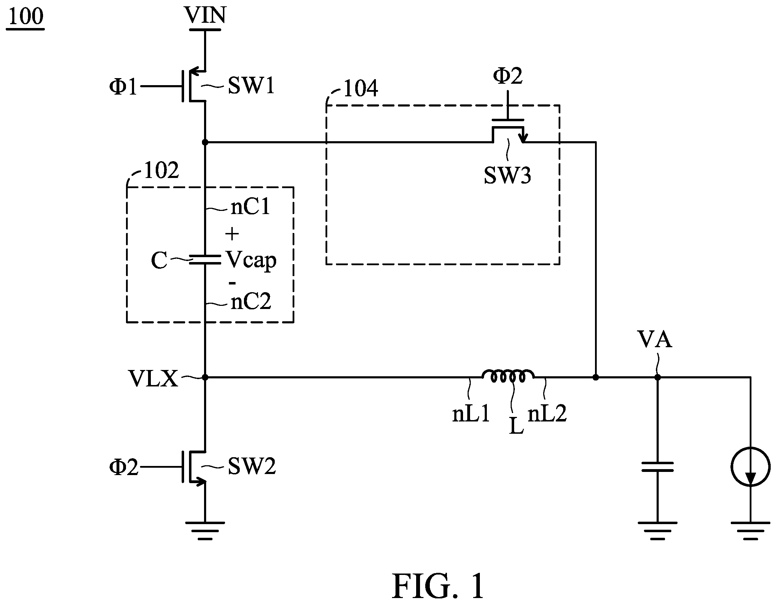

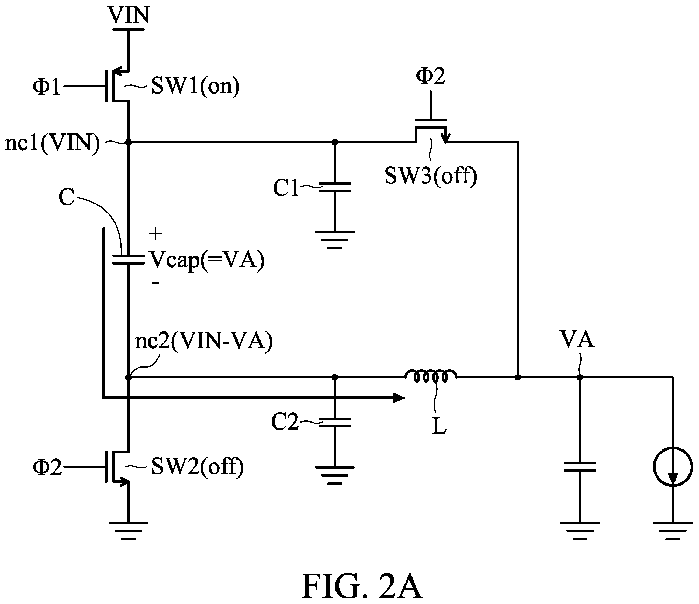

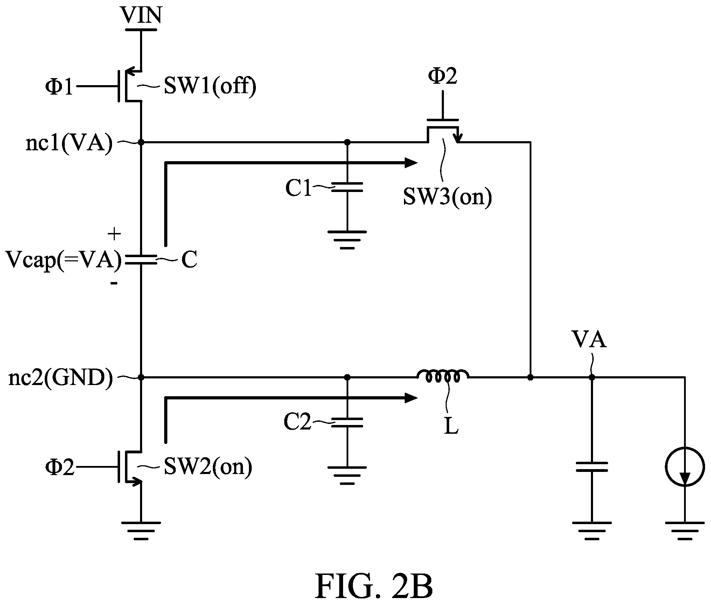

The converter described in relation to Figures 1 and 2 do not accord with the claimed invention and are presented for illustration purposes only.

### DETAILED DESCRIPTION OF THE INVENTION

The following description is made for the purpose of illustrating the general principles of the invention and should not be taken in a limiting sense. The scope of the invention isdetermined by reference to the appended claims.

FIG. 1 shows a buck converter.

The buck converter 100 converting an input voltage VIN to an output voltage VA has an inductor L, a voltage shift component 102, and a discharging branch 104. The inductor L is charged and discharged to regulate the output voltage VA. The voltage shift component 102 shifts the input voltage VIN to a lower level VLX to charge the inductor L. The discharging branch 104 is coupled to the inductor L when the inductor L is discharged.

Because of the voltage shift component 102, the switching loss (CV²F) is significantly suppressed by the lower operating voltages supplied to the parasitic capacitors. In FIG. 1, the voltage shift component 102 is a capacitor C, which can be replaced by any component capable of voltage shifting.

Because of the discharging branch 104, the total current on the circuit is suppressed, and the conduction loss (IR²) is significantly suppressed.

The voltage shift component 102 also suppresses the voltage ripple of VLX, which is suppressed from VIN to (VIN-VA). Therefore, the inductor current ripple is also suppressed, which further suppresses the inductor ACR loss.

The details of the buck converter 100 are described in the following paragraphs.

As shown, the buck converter 100 has a first switch SW1. In the buck converter 100, the first switch SW1 is a p-channel metal oxide semiconductor (PMOS) transistor but not limited thereto. When being turned on, the first switch SW1 couples the input voltage VIN to a first terminal nC1 of the voltage shift component 102. The voltage shift component 102 has a second terminal nC2 coupled to a first terminal nL1 of the inductor L. The inductor L has a second terminal nL2 that is coupled to the output terminal of the buck converter 100 that provides the output voltage VA.

The buck converter 100 has a second switch SW2 and a third switch SW3. In the buck converter 100, the second switch SW2 and the third switch SW3 are n-channel metal oxide semiconductor (NMOS) transistors but not limited thereto. When being turned on, the second switch SW2 couples the first terminal nL1 of the inductor L to ground (GND). As for the third switch SW3, the turned-on third switch SW3 couples the output terminal (VA) of the buck converter 100 to the first terminal nC1 of the voltage shift component 102.

In an exemplary embodiment, the first switch SW1 is turned on in a charging phase Φ1 of the inductor L, and the second switch SW2 and the third switch SW3 are turned on in a discharging phaseΦ2 of the inductor L. In an exemplary embodiment, when the first switch SW1 is turned on in the charging phaseΦ1 of the inductor L, the second and third switches SW2 and SW3 are turned off. When the second and third switches SW2 and SW3 are turned on in the discharging phaseΦ2 of the inductor L, the first switch SW1 is turned off.

During the discharging phase Φ2 of the inductor L, a voltage shift Vcap provided by the voltage shift component 102 to lower the input voltage VIN is set. In this example, the voltage shift Vcap is set to VA during the discharging phase Φ2 of the inductor L.

FIG. 2A illustrates the charging phase (Φ1) of the inductor L. The first switch SW1 is turned on (Φ1), and the voltage shift component 102 and the inductor L form a voltage divider between the input terminal (VIN) of the buck converter 100 and the output terminal (VA) of the buck converter 100. While a voltage VIN is supplied to a parasitic capacitor C1 at the terminal nc1, a divided voltage (VIN-VA) is supplied to a parasitic capacitor C2 at the terminal nc2.

FIG. 2B illustrates the discharging phase (Φ2) of the inductor L. The second and third switches SW2 and SW3 are turned on (Φ2), and the current flowing through the inductor L is reduced by the branch current flowing through the turned-on third switch SW3. The terminal nc1 (having the parasitic capacitor C1) is at the output voltage VA because of the turned-on third switch SW3. The terminal nc2 (having the parasitic capacitor C2) is at the ground voltage GND because of the turned-on second switch SW2. The capacitor C is charged to store the voltage (VA-GND) as the voltage shift Vcap required in the charging phase (Φ1) of the inductor L.

In this design, the voltage swing on the parasitic capacitor C1 is VIN~VA, and the voltage swing on the parasitic capacitor C2 is (VIN-VA)~GND. The switching loss (CV²F) is:$C 1 {\left(VIN-VA\right)}^{2} F + C 2 {\left(VIN-VA-GND\right)}^{2} F ,$ which is (C1+C2) (VIN-VA)²F. (VIN-VA)² is usually much lower than VIN². The switching loss (CV²F) is significantly suppressed.

For example, when the input voltage VIN is 4V and output voltage VA is 1V, (VIN-VA)² is 9, much lower than VIN² that is 16. In comparison with the conventional buck converters, the power efficiency of the buck converter 100 is considerably improved by the suppressed switching loss.

As for the conduction loss (IR²), it is:${\left(IL*D\right)}^{2} * Rp + {\left(IL*\left(1-D\right)\right)}^{2} * Rn 1 + {Ic}^{2} * Rn 2 + {IL}^{2} * RDC$ where IL is the current through the inductor L, D is the duty cycle of the charging/discharging of the inductor L, Ic is the current through the capacitor C, Rp is the parasitic resistor of the first switch SW1 (a PMOS transistor), Rn1 is the parasitic resistor of the second switch SW2 (an NMOS transistor), Rn2 is the parasitic resistor of the third switch SW3 (another NMOS transistor), and RDC is the equivalent resistance of the inductor L. Because of the discharging branch design, the current Ic and IL in the last two terms of the conduction loss function are considerably suppressed, and the conduction loss is significantly suppressed.

In this design, the conventional inductor current is divided into the current Ic and the current IL, For example, the current Ic and the current IL each may be just half the conventional inductor current. Thus, the conduction power is recued to (1/2)² + (1/2)², half the conventional conduction loss.

Furthermore, the duty cycle D of the buck converter 100 is discussed in this paragraph. To operate the buck converter 100, the duty cycle D should be set to VA/(VIN-VA). A conventional buck converter without the voltage divider design usually operates at a duty cycle VA/VIN. For a 4V-to-1V conversion, the duty cycle of the buck converter 100 is 1/3, which results in a better power efficiency than a conventional buck converter with a duty cycle 1/4.

The power efficiency of the present invention is obviously much better than conventional buck conversion circuits.

In the forgoing example, the output terminal (VA) of the buck converter 100 is directly coupled to the capacitor C through the third switch SW3 during the discharging phase (Φ2) of the inductor L to charge the capacitor C to store the output voltage VA as the voltage shift Vcap required in the charging phase (Φ2) of the inductor L. In some other exemplary embodiments, the capacitor C may be charged to store another voltage as the voltage shift Vcap.

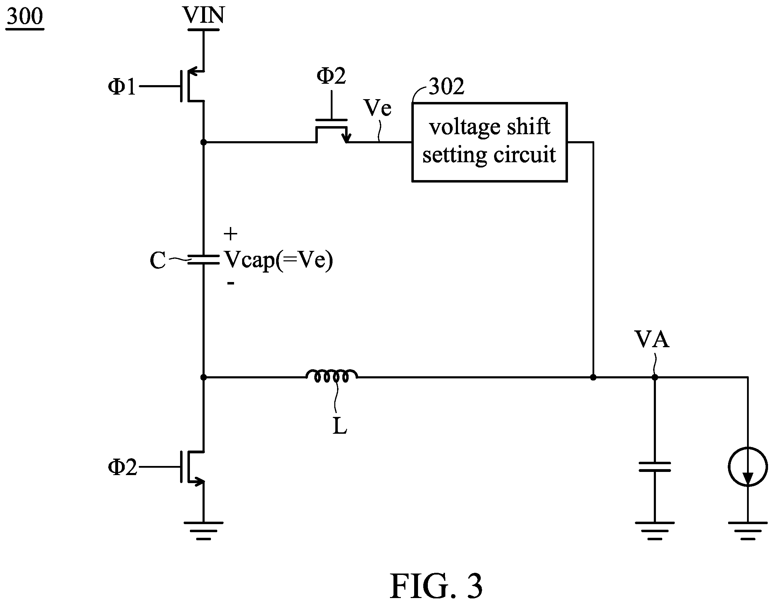

FIG. 3 illustrates a buck converter 300 in accordance with the claimed embodiment of the present invention.

The buck converter 300 has a voltage shift setting circuit 302, converting the output voltage VA of the buck converter 300 to the expected voltage Ve used in charging the capacitor C during the discharging phaseΦ2 of the inductor L. Thus, during the charging phaseΦ1 of the inductor L, the capacitor C provides Ve (=Ve-GND) as the voltage shift Vcap.

In an exemplary embodiment, the expected voltage Ve is b times the output voltage VA, where b is a number. Ve=b*VA. For example, b may be 2.

In an exemplary embodiment, the expected voltage Ve is b times the output voltage VA plus c, where b and c are two numbers. Ve=b*VA + c.

In another exemplary embodiment, the voltage shift setting circuit 302 may generate the expected voltage Ve based on the output voltage VA in a non-linear way.

Any circuit generating the expected voltage Ve based on the output voltage VA may be used to implement the voltage shift setting circuit 302.

In the forgoing exemplary embodiments, the voltage shift component is implemented by a capacitor C. Such a buck converter can be named a series cap-inductor buck converter. However, the voltage shift component is not limited the single capacitor C illustrated in the figures.

Note that the proposed buck converter does not add too many switches in its circuit. In comparison with other buck converters using a considerable number of switches, the proposed buck converter using the limited number of switches indeed suppresses the switching loss and does not need a complex circuit design.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A buck converter (300) arranged for converting an input voltage (VIN) to an output voltage (VA), comprising:
an inductor (L) having a first terminal and a second terminal coupled to the output terminal of the buck converter and arranged to be charged and discharged to regulate the output voltage;
a first switch (SW1) and a voltage shift component (102) implemented by a capacitor (C), wherein the first switch (SW1) is arranged to couple the input voltage (VIN) to a first terminal (nC1) of the voltage shift component (102) when being turned on, and the voltage shift component (102) having a second terminal (nC2) coupled to the first terminal of the inductor (L), wherein the voltage shift component (102) is operative to shift the input voltage to a lower level used for charging the inductor during a charging phase of the inductor (L);
a second switch (SW2), coupling the first terminal of the inductor to ground when being turned on; and
a third switch (SW3) coupled between the output terminal of the buck converter and the first terminal (nC1) of the voltage shift component;
**characterized in that** the buck converter further comprises:
a voltage shift setting circuit (302) coupled in series with the third switch (SW3), the voltage shift setting circuit (302) and the third switch (SW3) being connected between the output terminal of the buck converter and the first terminal (nC1) of the voltage shift component (102), and configured to convert the output voltage (VA) of the buck converter to an expected voltage (Ve) that is shifted from the output voltage (VA) and is used in charging the capacitor (C) during a discharging phase of the inductor

2. The buck converter as claimed in claim 1, wherein:
the first switch is arranged to be turned on in the charging phase of the inductor; and
the second switch and the third switch are arranged to be turned on in the discharging phase of the inductor.

3. The buck converter as claimed in claim 2, wherein:
the voltage shift provided by the voltage shift component to lower the input voltage is set during the discharging phase of the inductor.

4. The buck converter as claimed in claim 3, wherein:
the expected voltage is coupled to the capacitor through the third switch during the discharging phase of the inductor.

5. The buck converter as claimed in claim 4 arranged such that
the expected voltage is b times the output voltage, where b is a number.

6. The buck converter as claimed in claim 4 arranged such that
the expected voltage is b times the output voltage plus c, where b and c are two numbers.

7. The buck converter as claimed in any one of claims 2 to 6, wherein:
the first switch is a p-channel metal oxide semiconductor transistor; and
the second switch and the third switch are n-channel metal oxide semiconductor transistors.

## Patentansprüche

1. Abwärtswandler (300), angeordnet zum Konvertieren einer Eingangsspannung (VIN) in eine Ausgangsspannung (VA), umfassend:
einen Induktor (L), aufweisend einen ersten Anschluss und einen zweiten Anschluss, gekoppelt mit dem Ausgangsanschluss des Abwärtswandlers und angeordnet, um geladen und entladen zu werden, um die Ausgangsspannung zu regeln;
einen ersten Schalter (SW1) und eine Spannungsverschiebungskomponente (102), implementiert durch einen Kondensator (C), wobei der erste Schalter (SW1) angeordnet ist, um die Eingangsspannung (VIN) mit einem ersten Anschluss (nC1) der Spannungsverschiebungskomponente (102) zu koppeln, wenn er eingeschaltet wird, und wobei die Spannungsverschiebungskomponente (102) einen zweiten Anschluss (nC2) aufweist, gekoppelt mit dem ersten Anschluss des Induktors (L), wobei die Spannungsverschiebungskomponente (102) dazu betriebsfähig ist, die Eingangsspannung auf ein niedrigeres Level zu verschieben, verwendet zum Laden des Induktors während der Ladephase des Induktors (L);
einen zweiten Schalter (SW2), der, wenn er eingeschaltet wird, den ersten Anschluss des Induktors mit Masse koppelt; und
einen dritten Schalter (SW3), der zwischen den Ausgangsanschluss des Abwärtswandlers und den ersten Anschluss (nC1) der Spannungsverschiebungskomponente gekoppelt ist;
**dadurch gekennzeichnet, dass** der Abwärtswandler weiter Folgendes umfasst:
eine Spannungsverschiebungseinstellschaltung (302), gekoppelt in Reihe mit dem dritten Schalter (SW3), wobei die Spannungsverschiebungseinstellschaltung (302) und der dritte Schalter (SW3) zwischen dem Ausgangsanschluss des Abwärtswandlers und dem ersten Anschluss (nC1) der Spannungsverschiebungskomponente (102) verbunden sind, und konfiguriert, um die Ausgangsspannung (VA) des Abwärtswandlers in eine erwartete Spannung (Ve) zu wandeln, die gegenüber der Ausgangsspannung (VA) verschoben ist und zum Laden des Kondensators (C) während einer Entladephase des Induktors (L) verwendet wird.

2. Abwärtswandler nach Anspruch 1, wobei:
der erste Schalter angeordnet ist, um in der Ladephase des Induktors eingeschaltet zu werden; und
der zweite Schalter und der dritte Schalter angeordnet sind, um in der Entladephase des Induktors eingeschaltet zu werden.

3. Abwärtswandler nach Anspruch 2, wobei:
die von der Spannungsverschiebungskomponente bereitgestellte Spannungsverschiebung zum Senken der Eingangsspannung während der Entladephase des Induktors eingestellt wird.

4. Abwärtswandler nach Anspruch 3, wobei:
die erwartete Spannung während der Entladephase des Induktors über den dritten Schalter an den Kondensator gekoppelt ist.

5. Abwärtswandler nach Anspruch 4, so angeordnet, dass
die erwartete Spannung das b-fache der Ausgangsspannung ist, wobei b eine Zahl ist.

6. Abwärtswandler nach Anspruch 4, so angeordnet, dass
die erwartete Spannung das b-fache der Ausgangsspannung plus c ist, wobei b und c zwei Zahlen sind.

7. Abwärtswandler nach einem der Ansprüche 2 bis 6, wobei:
der erste Schalter ein p-Kanal-Metalloxid-Halbleitertransistor ist; und
der zweite Schalter und der dritte Schalter n-Kanal-Metalloxid-Halbleitertransistoren sind.

## Revendications

1. Convertisseur abaisseur (300) de tension agencé pour convertir une tension d'entrée (VIN) en une tension de sortie (VA), comprenant :
un inducteur (L) présentant une première borne et une deuxième borne couplées à la borne de sortie du convertisseur abaisseur de tension et agencées pour être chargées et déchargées pour réguler la tension de sortie ;
un premier commutateur (SW1) et un composant (102) de décalage de tension mis en œuvre par un condensateur (C), dans lequel le premier commutateur (SW1) est agencé pour coupler la tension d'entrée (VIN) à une première borne (nC1) du composant (102) de décalage de tension lorsqu'il est mis sous tension, et le composant (102) de décalage de tension présentant une deuxième borne (nC2) couplée à la première borne de l'inducteur (L), dans lequel le composant (102) de décalage de tension est conçu pour décaler la tension d'entrée à un niveau inférieur utilisé pour charger l'inducteur pendant une phase de charge de l'inducteur (L) ;
un deuxième commutateur (SW2), couplant la première borne de l'inducteur à la terre lorsqu'il est mis sous tension ; et
un troisième commutateur (SW3) couplé entre la borne de sortie du convertisseur abaisseur de tension et la première borne (nC1) du composant de décalage de tension ;
**caractérisé en ce que** le convertisseur abaisseur de tension comprend en outre :
un circuit (302) de réglage de décalage de tension couplé en série avec le troisième commutateur (SW3), le circuit (302) de réglage de décalage de tension et le troisième commutateur (SW3) étant connectés entre la borne de sortie du convertisseur abaisseur de tension et la première borne (nC1) du composant (102) de décalage de tension, et configuré pour convertir la tension de sortie (VA) du convertisseur abaisseur de tension en une tension attendue (Ve) qui est décalée de la tension de sortie (VA) et est utilisée pour charger le condensateur (C) pendant une phase de décharge de l'inducteur (L).

2. Convertisseur abaisseur de tension selon la revendication 1, dans lequel :
le premier commutateur est agencé pour être mis sous tension dans la phase de charge de l'inducteur ; et
le deuxième commutateur et le troisième commutateur sont agencés pour être mis sous tension dans la phase de décharge de l'inducteur.

3. Convertisseur abaisseur de tension selon la revendication 2, dans lequel :
le décalage de tension fourni par le composant de décalage de tension pour abaisser la tension d'entrée est réglé pendant la phase de décharge de l'inducteur.

4. Convertisseur abaisseur de tension selon la revendication 3, dans lequel :
la tension attendue est couplée au condensateur via le troisième commutateur pendant la phase de décharge de l'inducteur.

5. Convertisseur abaisseur de tension selon la revendication 4 agencé de sorte que
la tension attendue soit b fois la tension de sortie, où b est un nombre.

6. Convertisseur abaisseur de tension selon la revendication 4 agencé de sorte que
la tension attendue soit b fois la tension de sortie plus c, où b et c sont deux nombres.

7. Convertisseur abaisseur de tension selon l'une quelconque des revendications 2 à 6, dans lequel :
le premier commutateur est un transistor métal-oxyde-semi-conducteur à canal p ; et
le deuxième commutateur et le troisième commutateur sont des transistors métal-oxyde-semi-conducteur à canal n.
